# EUROPEAN PATENT SPECIFICATION

(11) **EP 3 743 473 B1**
(45) Date of publication and mention of the grant of the patent: **12.01.2022**
(21) Application number: 20720009.8
(22) Date of filing: 16.04.2020
(51) Int. Cl.: C09D 11/101

(54) **LOW MIGRATION ELECTRON BEAM CURABLE PRIMER**
ELEKTRONENSTRAHLHÄRTBARER PRIMER MIT NIEDRIGER MIGRATION
APPRÊT DURCISSABLE PAR FAISCEAU ÉLECTRONIQUE À FAIBLE MIGRATION

(30) Priority: 18.04.2019 US 201962835529 P
(43) Date of publication of application: 02.12.2020
(73) Proprietor: Sun Chemical Corporation, Parsippany, NJ 07054 (US)
(72) Inventor: ADAMS, Joerg, 63791 Karlstein am Main (DE); GAUDL, Kai-Uwe, 63791 Karlstein am Main (DE)
(74) Representative: Carpmaels & Ransford LLP
(86) International application number: PCT/EP2020/060707
(87) International publication number: WO 2020/212488

(56) References cited:
- WO-A1-2017/044334
- WO-A1-2018/009591
- WO-A1-2018/052454

## Description

The present invention is directed to a chlorine-free, low migration, electron-beam (EB) curable composition, which has particular utility as a primer, particularly one which is applied by offset printing. The primer provides good adhesion of electron-beam curable inks to substrates, especially to plastics. In particular, the present invention is directed to a chlorine-free, low migration lithographic electron-beam curable primer providing good ink adhesion to corona-treated PET films for flexible packaging. The present invention is also directed to a low migration, electron-beam (EB) curable composition suitable for use as a printing ink, particularly a so-called "first-down white ink", particularly one which is applied by offset printing.

### BACKGROUND OF THE INVENTION

For energy-curable inks and coatings for sensitive packaging applications, such as for example food-packaging and pharmaceuticals, electron beam drying (i.e. curing) is especially advantageous as the higher conversion of double-bonds compared to UV-curing gives lower levels of migrating monomers. Combined with the total absence of photoinitiators, this makes the technology suitable for sensitive applications, such as food-packaging.

However, due to acrylate group polymerization during electron beam drying, the ink or coating can shrink considerably and impart stress and strain on the polymer film / ink-layer interface. This can lead to a loss of adhesion of the ink to the substrate, especially to thin flexible plastic films.

Adhesion of an ink or coating can be achieved by several principles, for example by interlocking of polymer chains on a rough surface, electrostatic attraction, van der Waals interaction or the formation of chemical bonds between functional groups on the substrate surface and the ink or coating.

Recently, the use of the lithographic printing process has made progress in the area of flexible packaging, which has long been the domain of flexographic printing. Advantages for lithographic printing include better print resolution and simpler, easier to use plate technology. Combined with instantaneous electron beam (EB) drying, lithographic printing provides a viable technology for flexible packaging on plastic films for both, surface printing and reverse printing for laminated structures.

However, printed with a lithographic process, the adhesion of inks and coatings to plastic films can be a challenge for both surface printing and for laminates, especially on corona-treated PET which is widely used as a packaging substrate for flexible packaging. Often a lithographic primer is applied prior to printing the inks to impart adhesion between the substrate and the following ink and coating layers. The lithographic primer and the lithographic inks are applied usually wet-on-wet and cured in one step by electron beam.

Especially effective primers are often based on chlorinated polyesters, as for example those described in WO2018009591 and EP 2513210B1. However, in some cases at higher EB dose rate levels in electron beam curing, chlorinated materials may undergo a chemical transition forming other small chlorinated molecules which can adversely affect their use in sensitive application such as for example food packaging and may pose a challenge regarding regulatory standards. The transition of chlorinated materials under EB is described in "Electron beam degradation of chlorinated hydrocarbons in air" Radiation Physics and Chemistry 1995 46(4) pages 1137-1142.

Besides providing good adhesion of the ink to the substrate, especially to a corona-treated PET film, a low migration primer for offset printing must fulfill additional properties, such as complying with the specific migration limits (SML) requested by authorities and customers and showing a good lithographic behavior when printed by an offset print process.

The adhesion of electron-beam curable inks to flexible packaging substrates (e.g. plastic foils) is often difficult to achieve, especially on corona-treated PET films. The present work discloses a solution by applying an electron-beam curable primer, which is suitable for food packaging applications.

The objective of the present invention is to provide a low-migration, chlorine-free, electron-beam curable composition, particularly a primer, preferably applied by offset printing, for sensitive applications such as food packaging and pharmaceutical packaging. These primers give good adhesion between electron curable inks and substrates, such as plastic substrates, in both surface prints and laminates. These primers impart similar adhesion performance as non-low migration primers without the risk of formation of small chorine materials by EB curing. A further objective of the present invention is to provide an electron-beam curable first-down white ink composition.

Citation or identification of any document in this application is not an admission that such document is available as prior art to the present invention.

### SUMMARY OF THE INVENTION

The aforementioned problems have been solved by providing a chlorine-free electron-beam curable composition suitable for offset printing, particularly lithographic printing, comprising:
- 10-40% of one or more acrylate monomers;
- 5-30% of one or more acrylate oligomers;
- 5-30% of one or more chlorine-free inert resins;
- 5-30% of one or more acrylated epoxidized vegetable oils; and
- 0-60% of one or more white pigment.

In a first preferred embodiment, there is provided a chlorine-free electron-beam curable primer for offset printing, particularly lithographic printing, comprising:
- 10-40% (preferably 20-40%, preferably 20-30%) of one or more acrylate monomers;
- 5-30% (preferably 10-30%, preferably 20-30%) of one or more acrylate oligomers;
- 5-30% of one or more chlorine-free inert resins (preferably 10-25%, preferably 15-25%);
- 5-30% (preferably 10-20%) of one or more acrylated epoxidized vegetable oils; and
- 0-60% of one or more white pigment, and in one embodiment the primer does not contain white pigment.

In a second preferred embodiment, there is provided a chlorine-free electron-beam curable primer for offset printing, particularly lithographic printing, comprising:
- An acrylate monomer 20-40% (preferably 20-30%)
- An acrylate oligomer 5-30% (preferably 10-30%, preferably 20-30%)
- A chlorine-free inert resin 5-30% (preferably 10-25%, preferably 15-25%)
- An acrylated epoxidized vegetable oil 5-30% (preferably 10-20%).

Thus, in one embodiment, the primer does not contain white pigment.

In a third preferred embodiment, there is provided a chlorine-free electron-beam curable composition comprising:
- 10-40% (preferably 10-35%, preferably 15-30%) of one or more acrylate monomers;
- 5-30% (preferably 5-25%, preferably 10-20%) of one or more acrylate oligomers;
- 5-30% (preferably 5-20%, preferably 5-15%) of one or more chlorine-free inert resins;
- 5-30% (preferably 5-25%, preferably 5-20%, preferably 5-15%, preferably 5-10%) of one or more acrylated epoxidized vegetable oils; and
- 10-60% (preferably 40-60%) of one or more white pigment.

Thus, the third embodiment of the present invention provides a chlorine-free electron-beam curable composition comprising:
- An acrylate monomer 10-35%, preferably 15-30%
- An acrylate oligomer 5-25% (preferably 10-20%)
- A chlorine-free inert resin 5-20% (preferably 5-15%)
- An acrylated epoxidized vegetable oil 5-25% (preferably 5-20%, preferably 5-15%, preferably 5-10%)
- A white pigment 10-60% (preferably 40-60%).

The composition of the third embodiment is particularly suitable as a first-down white printing ink, suitable for offset printing, particularly lithographic printing. The term "first-down white" has its conventional meaning in the art, namely a white ink composition which is applied directly to the surface of the substrate, i.e. without an intervening primer layer, and which may be over-printed with one or more coloured ink(s) in the desired pattern(s).

Unless stated otherwise, amounts are given throughout as % by weight of the total composition.

### DETAILED DESCRIPTION

### Monomers:

Examples of typical acrylic (i.e. acrylate) monomers suitable for use in the present invention are preferably esters of acrylic acid or methacrylic acid with a defined structure. Though mono-functional (meth-)acrylates may be used, especially in applications where low viscosity is needed, a functionality ≥ 2 and a weight number average of about 200-800 Daltons is preferred.

A non-limiting list of examples of acrylate monomers and oligomers suitable for use in this invention include 1,2-ethylene glycol diacrylate, 1,4-butandiol diacrylate, 1,6-hexandiol diacrylate, dipropylene glycol diacrylate, neopentylglycol diacrylate, ethoxylated neopentylglycol diacrylates, propoxylated neopentylglycol diacrylates, tripropylene glycol diacrylate, bisphenol-A diacrylate, ethoxylated bisphenol-A-diacrylates, bisphenol-A-diglycidylether diacrylate, ethoxylated bisphenol-A-diacrylates, poly(ethylene)glycol diacrylates, trimethylolpropane triacrylate, trimethylolpropane trimethacrylate, ethoxylated trimethylolpropane triacrylates, propoxylated trimethylolpropane triacrylates, propoxylated glycerol triacrylates, propoxylated diglycerol tetraacrylate, pentaerythritol triacrylate, pentaerythrithol tetraacrylate, ethoxylated pentaerythritol triacrylates, ethoxylated pentaerythrithol tetraacrylates, propoxylated pentaerythritol tetraacrylates, ethoxylated pentaerythritol tetraacrylates, ditrimethylolpropane tetraacrylate, dipentaerythritol pentaacrylate, pentaerythritol hexaacrylate, dipentaerythritol hexaacrylate, ethoxylated dipentaerythritol hexaacrylates or mixtures thereof. Preferred are ethoxylated trimethylolpropane triacrylates, ethoxylated pentaerythritol triacrylates and propoxylated pentaerythritol tetraacrylates.

To minimize the risk of migration of (meth-)acrylate monomers even in the case of incomplete cure in low migration inks, monomers with the highest acrylate functionality and higher molecular weight are preferred such as ethoxylated trimethyol propane triacrylate, propoxylated glycerol triacrylate, propoxylated diglycerol tetraacrylate, ditrimethylol propane tetraacrylate, pentaerythrithol tetraacrylate, ethoxylated pentaerythrithol tetraacrylate, propoxylated pentaerythrithol tetraacrylate, dipentaerythritol pentaacrylate, pentaerythritol hexaacrylate and ethoxylated dipentaerythritol hexaacrylate, available from suppliers such as BASF, Allnex and Arkema company. Thus, even if only one of four or six acrylate groups polymerizes, the whole molecule is anchored in the crosslinked acrylate matrix and can no longer migrate. Usually with monomers, viscosity and cure speed can be adjusted.

### Oligomers:

Suitable acrylated oligomers (i.e. acrylate oligomers) for use in the present invention comprise for example acrylated oligomers preferably with a weight number average of about 400-5,000 Daltons and an acrylate functionality ≥ 2, such as for example epoxy acrylates, polyester acrylates, acrylated polyurethanes, acrylated polyacrylates, acrylated polyethers. Preferred is an aliphatic acrylated polyurethane. Polyurethanes are known to give good adhesion to plastic films, for example in flexographic inks. These oligomers impart rheology, pigment wetting, ink transfer on the printing press, gloss, chemical resistance and other film properties. Further examples of suitable acrylate oligomers are listed above in combination with suitable acrylate monomers.

In all cases, molecular weight is measured by size exclusion chromatography as defined below.

### Acrylated epoxidized vegetable oils

Suitable acrylated epoxidized vegetable oils, are usually based on linseed oil or soybean oil, linseed oil and castor oil and mixtures thereof, having a molecular weight of 500-2500 Daltons. Preferred is an acrylated, epoxidized, soybean oil having an average acrylate functionality of ≥ 3 and a molecular weight of > 1000 Daltons. By adjusting the amount of acrylated, epoxidized oils, the flexibility of the ink for flexible packaging can be modified.

### Inert resin:

Suitable inert resins show solubility in the acrylic monomers and exhibit a molecular weight of 500-50000 Daltons, preferably 1000-4000 Daltons. The term "inert resins" refers to resins that have no polymerizable acrylic groups. They can derive for example from rosin resins, hydrocarbon resins, polyesters, polyketones, polyurethanes, aldehyde resins, urea-formaldeyhde resins, epoxy resins or cellulose resins. Preferred are polyketones and urea-formaldeyhde resins. According to the present invention, the inert resin is chlorine-free.

Preferably, the inert resin is non-EB-curable.

### White pigment

As previously described, the composition can additionally contain a white pigment, such as a titanium dioxide in its anatase or rutile modification, zinc oxide, barium sulfate, zinc sulfide, lithopone or calcium carbonate. Preferably, the white pigment is titanium dioxide. In the case of reverse printing, usually when a laminate is targeted, a first-down white ink may be applied from the first print station.

We have observed surprisingly, that a first-down white ink based on the primer formulation of the present invention and a white pigment also exhibits primer properties, which increase the adhesion between the substrate to be printed on and the subsequent ink layers. Hence, the composition of the present invention is suitable as a first-down white ink.

### Additional components

In some cases, the compositions of the present invention may also additionally contain one or more colorants in the form of a dye or pigment dispersed therein. Pigments suitable for use in the present invention include conventional organic or inorganic pigments. Representative pigments may, for example, be selected from the group of Pigment Yellow 1, Pigment Yellow 3, Pigment Yellow 12, Pigment Yellow 13, Pigment Yellow 14, Pigment Yellow 17, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 111, Pigment Yellow 114, Pigment Yellow 121, Pigment Yellow 126, Pigment Yellow 127, Pigment Yellow 136, Pigment Yellow 138, Pigment Yellow 139, Pigment Yellow 174, Pigment Yellow 176, Pigment Yellow 188, Pigment Yellow 194, Pigment Orange 5, Pigment Orange 13, Pigment Orange 16, Pigment Orange 34, Pigment Orange 36, Pigment Orange 61, Pigment Orange 62, Pigment Orange 64, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 48: 2, Pigment Red 53: 1, Pigment Red 57: 1, Pigment Red 81: 1, Pigment Red 112, Pigment Red 122, Pigment Red 170, Pigment Red 184, Pigment Red 210, Pigment Red 238, Pigment Red 266, Pigment Blue 15, Pigment Blue 15: 1, Pigment Blue 15: 2, Pigment Blue 15: 3, Pigment Blue 15: 4, Pigment Blue 61, Pigment Green 7, Pigment Green 36, Pigment Violet 1, Pigment Violet 19, Pigment Violet 23, Pigment Black 7.

The compositions of the present invention exhibit excellent primer properties when mixed with a colorant or other electron-beam curable inks. Hence, the composition of the present invention is suitable as a transparent white ink, a let-down or mixing varnish.

The compositions of the present invention may further contain the usual additives to modify properties such as surface tension, gloss, flow, pigment wetting and abrasion resistance of the printed ink. Such additives typically are surface-active agents such as waxes, leveling agents, shelf-life stabilizers, wetting agents, slip agents, flow agents, dispersants, de-aerators, etc.

The compositions of the present invention may further contain the usual extenders such as clay, talc, calcium carbonate, magnesium carbonate or silica to adjust water uptake, misting and color strength.

The compositions of the present invention may further contain a stabilizer to ensure good pot life. Examples include nitroso-based stabilizers, such as nitroso-phenylhydroxylamine; phenolic stabilizers such as hydroquinone (HQ), methylether hydroquinone (MEHQ), butylhydroxytoluene (BHT) and 2,6-di-tert-butyl-N,N-dimethylamino-p-cresol; and nitroso-phenylhydroxylamine stabilizers based on copper dithiocarbamates.

Such additional components are typically present in the compositions of the present invention in amounts of no more than about 15%, typically no more than about 12% of the composition. Thus, in the compositions of the present invention, the combined total amount of said one or more acrylate monomers, said one or more acrylate oligomers, said one or more chlorine-free inert resins, said one or more acrylated epoxidized vegetable oils, and said one or more white pigments, is preferably at least 85%, preferably at least 88% by weight of the total composition.

Typically, the compositions of the present invention exhibit a viscosity of about 5-120 Pa·s at a shear rate of D = 50 1/s at 23°C, preferred is a viscosity of about 20-70 Pa·s, measured with cone & plate rheometer at 23°C.

The substrate to be printed may be composed of any typical substrate material such as paper, plastics, metals, and composites. The preferred substrate is plastic film based on for example polyethylene, polypropylene, biaxially oriented polypropylene, cast polypropylene, polyethylene terephthalate (PET), biaxially oriented polyethylene terephthalate (PET), polyamide, polystyrene, bio-based films and foils derived from polylactic acid, as used for packaging material and food-packaging material. The materials may be coated for example by an acrylic coating or a polyurethane coating; or may be chemically surface treated, corona surface treated, plasma surface treated, flame-treated metallized or neat.

To obtain proper adhesion, the surface energy of the plastic film should not be too low, otherwise the ink or coating will not wet the surface and adhesion is difficult to achieve. Sufficient surface energy is usually achieved by corona pre-treatment of the surface prior to the application of the ink or coating. By this, functional groups, such as hydroxy and carbonyl groups, are generated at the surface giving an increased level of surface energy. Uncoated substrates often need corona treatment in order to achieve the right level of surface tension to get proper wetting of the primer to the substrate. Usually a surface tension of 38-42 dynes/cm is sufficient to provide good wetting of the compositions of the invention on the plastic surface.

The application of the primers and the inks of the present invention is preferably carried out by a lithographic (offset) print station, on a web-based printing machine; usually the first print station after the corona treatment of the film.

The primers according to the invention are especially suitable for offset printing, and more especially to lithographic offset printing. However, the compositions of the present invention may also be applied by other coating/printing processes, including flexographic, inkjet, screen and gravure printing processes.

The compositions of the present invention can be cured by electron beam (EB). In an EB-dryer, electrons are accelerated in an electrical field and exit the dryer through a thin metallic foil. Subsequently, the electrons penetrate the acrylic ink or coating and initiate a radical or ionic polymerization which leads to instant drying (i.e. curing). Commercially EB-dryers are available for example from Energy Science, Inc. of Wilmington, Mass, or Comet company of Switzerland. The energy absorbed, also known as the dose, is measured in units of kiloGrays (kGy). Usually, the electron beam dose should be within the range of 10 kGy to about 40 kGy, for complete curing. With the radiation curable compositions of the present invention a radiation dose of 20-30 kGy at an oxygen level of ≤ 200 ppm is usually sufficient to obtain a dry, solvent-resistant film. An acceleration voltage of 70-200 keV can be applied, usually 70-120 keV are sufficient to provide a good through-cure of primer, inks and overprint varnishes.

As previously described, EB curing technology is especially suitable for sensitive packaging applications, as the higher conversion of the double-bonds compared to UV-curing, gives lower levels of migrating monomers. Combined with the total absence of photoinitiators, this makes this technology suitable for sensitive applications such as food-packaging.

Thus, it will be appreciated that the compositions of the present invention do not contain any photoinitiators. As such, the compositions of the present invention are not curable by UV light.

When inks and coating compositions are applied to the non-contact surface of packaging intended for foodstuffs, then any contamination from the package impacting the foodstuff should be prevented.

There are two major ways in which the foodstuff can be affected; by through migration and by set-off migration. In the case of polymeric substrates, the most likely route for migratable species from the ink contaminating the foodstuff is by set-off migration. This is where printed matter is stacked or reeled prior to it being filled with food. Thus, the ink comes into contact with what will be the food-contact surface of the package and can migrate onto the contact surface and contaminate the foodstuff.

However, when the plastic film exhibits poor barrier properties, such as with polyethylene, through migration can occur as well, especially at higher migration temperatures such as 60°C, where the film expands, and small molecules can migrate more easily through the material.

Even though there are no universally agreed regulations on how to be food compliant, there are some guidelines and recommendations as for example given by the association of European Printing ink manufactures (EUPIA). EUPIA also provides guidelines on how to measure the potential level of migratables arising from printed matter. Such specific migration limits are given for example in the Swiss Ordinance Annex 10 of the Federal Department of Home Affairs from May 1, 2017 on materials and articles intended to come into contact with foodstuffs, or the EU plastics directive. To be compliant, the specific migration limits (SML) for the acrylates and other listed materials as stated in these doctrines should not be exceeded.

This is achieved with the compositions of this invention. Preferred is the use of high functional acrylate materials and higher molecular weight acrylate materials to comply with the low SML's. For those acrylates which are not fully tested and where no SML is available, the migration limit is 10 ppb.

Moreover, unlike many other primers or inks, the compositions of this invention do not contain chlorinated materials, such as chlorinated polyester. Chlorinated materials may undergo a chemical change during electron beam radiation exposure and may form new small molecules, which could then adversely affect the suitability of the primers and inks for food packaging. Such molecules are of health concern and may cause regulatory issues as "non-intentionally added substances" (NIAS).

The low migration, chlorine-free, lithographic EB-curable primers and inks of this invention is suitable for any kind of plastic film, especially for coated PET and corona treated PET. They provides acceptable tape adhesion for surface prints and good interlayer adhesion between the substrate to be printed on and the subsequent ink layers.

Surprisingly, the primers and compositions of this invention can also increase scratch and rub resistance of subsequent ink films. In flexible packaging, a thin plastic film is typically used in conjunction which flexible inks which follow the movements of the packaging material without cracking.

Another application for the primers and compositions of the present invention is laminates. Laminates consist of two substrate films, usually polymers or sometimes polymer/paper combinations, which protect the ink layers in between. Usually, a primer is printed on the first film to impart good adhesion to the adjacent ink layer. Subsequently, one or more ink layers is printed wet-on-wet. In order to achieve good adhesion to the second plastic substrate film, an adhesive is applied between the ink and the second substrate.

State of the art are poly(isocyanate) adhesives which cured by reaction with a polyol hardener. These adhesive systems can be solvent-free or can contain a solvent, usually ethyl acetate. They are typically applied by a laminator in film weights of 2-3 g/m² for solvent-free, and 3-4 g/m² for solvent containing. After application, the laminates are dried at room temperature or elevated temperature (e.g. 30-50°C). The strength of a laminate is usually measured by the lamination bond strength, measured by a peel-tear tester which measures the force needed to tear apart the two outside films. With the primers and compositions of this invention, the adhesion between the ink layer and the substrate to be printed on can be improved, so that the overall measured lamination bond strength improves. With the primers and compositions of this invention lamination bond strengths up to 5 N/15 mm can be achieved.

All in all, the primers and compositions of the present invention can increase the adhesion of inks to the substrates in both surface prints and laminates and is suitable for sensitive applications such as food packaging and pharmaceutical packaging due to its low migration profile and absence of chlorinated materials.

In a further aspect, the present invention provides a method of preparing printed matter comprising:
applying the curable composition described herein to a plastic substrate by offset printing;
curing the composition by electron beam.

The method typically further comprises applying an electron-beam curable ink on top of said composition, preferably by offset printing, and curing the electron-beam curable ink by electron beam.

Preferably, the electron-beam curable ink is applied wet-on-wet on top of said composition, and said composition and said electron-beam curable ink are cured by electron-beam in a single curing step.

In a further aspect, the present invention provides printed matter, comprising a plastic substrate, the cured composition as described herein and a cured electron-beam curable offset ink.

In a further aspect, the present invention provides the use of the curable composition described herein to promote adhesion between electron-beam curable inks and plastic substrates, particularly in surface prints and laminates.

In a further aspect, the present invention provides a laminate structure comprising a plastic substrate, the curable composition described herein, one or more subsequent ink layers, an adhesive and a sealing substrate wherein the lamination bond strength of the laminate structure is > 1 N/15mm, preferably > 2 N/15mm, preferably > 3 N/15mm. The curable composition and subsequent ink layers are preferably applied by an offset printing process, preferably a lithographic offset printing process.

The invention is further described by the following numbered paragraphs:
1. A chlorine-free, electron-beam curable primer for lithographic printing, comprising 20-40% of one or more acrylate monomers;
   5-30% of one or more acrylate oligomers;
   5-30% of one or more chlorine-free inert resins;
   5-30% of one or more acrylated epoxidized vegetable oils; and
   0-60% of one or more white pigments selected from the group consisting of titanium dioxide, zinc oxide or combinations thereof.
2. The primer of paragraph 1, wherein the one or more acrylate monomers are selected from the group consisting of ethoxylated trimethylol propane triacrylate, propoxylated glycerol triacrylate, propoxylated diglycerol tetraacrylate, ditrimethylol propane tetraacrylate, pentaerythrithol tetraacrylate, ethoxylated pentaerythrithol tetraacrylate, propoxylated pentaerythrithol tetraacrylate, dipenterythritol pentaacrylate, pentaerythritol hexaacrylate, ethoxylated dipenterythritol hexaacrylate, and combinations thereof.
3. The primer according to paragraph 1, wherein the one or more acylate oligomer comprises an aliphatic acrylated polyurethane.
4. The primer according to paragraph 1, wherein the one or more inert resins are selected from the group consisting of polyketone resins, urea-formaldehyde resins, and combinations thereof.
5. The primer according to paragraph 1, wherein the one or more acrylated epoxidized vegetable oils comprises an acrylated epoxidized soybean oil.
6. The primer according to paragraph 1, further comprising one or more colorants.
7. The primer according to any preceding paragraphs, wherein the primer is suitable for low migration and complies with the specific migration levels given in the Swiss Ordinance Annex 10 of the Federal Department of Home Affairs on materials and articles intended to come into contact with foodstuffs from May 1, 2017.
8. A laminate structure comprising a plastic substrate, the primer of any one or more of paragraphs 1-8, one or more ink layers, an adhesive and a sealing substrate wherein the lamination bond strength of the laminate structure is > 1 N/15mm.
9. A laminate structure comprising a plastic substrate, the primer of any one or more of paragraphs 1-8, one or more ink layers, an adhesive and a sealing substrate wherein the lamination bond strength of the laminate structure is > 2 N/15mm.
10. A laminate structure comprising a plastic substrate, the primer of any one or more of paragraphs 1-8, one or more ink layers, an adhesive and a sealing substrate wherein the lamination bond strength of the laminate structure is > 3 N/15mm.
11. The laminate structure of any one or more of paragraphs 8-10, wherein the primer and ink layers are applied by an offset printing process.
12. The laminate structure of any one or more of paragraphs 8-11, wherein at least one of the plastic substrates is polyethylene terephthalate (PET).
13. The laminate structure of any one or more of paragraphs 8-12, wherein at least one of the plastic substrates is corona-treated, plasma treated or flame-treated.
14. A printed matter, comprising a plastic substrate, the primer of any one or more of paragraphs 1-7 and an electron-beam curable offset ink.

The present invention has been described in detail, including the preferred embodiments thereof.

### Test methods

*Molecular Weight.* Unless otherwise stated, a reference to "molecular weight", "weight number average" or "average molecular weight" is preferably to the number average molecular weight (Mn). The molecular weight can be measured by those techniques known in the art such as gel permeation chromatography. For instance, molecular weight determination may be conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. Preferably, molecular weight is calculated by comparison with a polystyrene standard. The skilled person will appreciate that this definition of molecular weight applies to polymeric materials which typically have a molecular weight distribution. The molecular weight of non-polymeric compounds are defined and calculated on the basis of the molecular structure of the compound.

Viscosity was measured with a Physika 300 cone and plate rheometer from Anton Parr GmbH at a shear rate of D = 2-100 1/s. The viscosity value at D = 50 1/s is recorded (Pa.s). Unless stated otherwise viscosity was measured at 23 °C.

Tack is measured with a calibrated "Tack-o-scope" instrument (Model 2001) from IGT Testing Systems, Netherlands. 1 ml of ink is placed on the EPDM rubber distribution roller at 30°C, distributed for 90 seconds at a roller speed of 50 rpm, then 30 seconds at 300 rpm. The tack value is then taken at a roller speed of 150 rpm.

Flow is measured with a vertically arranged aluminum plate on which 1 ml of ink is placed. The distance in cm that the ink ran down the plate after 15 minutes is recorded.

Fineness of grind is an important parameter that describes the quality of dispersion of solid particles in the primer. A grindometer is used to test the fineness of the particles. It consists of a steel block with a channel of varying depth machined into it, starting at a convenient depth for the type of ink to be measured and becoming shallower until it ends flush with the block's surface. The depth of the groove is marked off on a graduated scale next to it. The ink to be tested is placed onto the deep end of the groove and scraped towards the shallow end with a flat metal scraper. At the point of 4µm on the graduated scale, the number of large irregularities is observed (first number in bracket) and number of small irregularities (second number in bracket). (0/0) means that there are neither large particles nor small irregularities observed and considered as passed.

Migration analysis - printed laminates having a printed area of 50 cm², are placed in standard migration cells with the food contact side of the print in contact with 2g of Tenax simulant for 10 days at 40° (or for a more severe test at 60°C). After the 10 days, the cells are emptied and the Tenax is extracted in 60 ml of acetonitrile. The acetonitrile is then evaporated to 1ml using an automatic evaporator and the resulting concentrate is analyzed by gas-chromatography-mass spectrometry (GC-MS) and Ultra high performance, liquid chromatography-time of flight mass-spectrometry (UHPLC-MS-TOF).

Tape test adhesion - a defined adhesion tape (TESA 4104) is placed on top of the cured inks with pressure, left for 1 minute and removed with force. The area under the tape is observed and the % of retained ink is recorded. The experiment may be repeated three times with fresh sample material to increase accuracy.

Lamination bond strengths measurement - laminated samples are cut into strips. At the end of one strip the two films of the lamination are separated to give the peel-tear tester jaws a good place to grip. The laminated sample is placed in the jaws of an Instron peel tear tester so that the primary film (the one printed on) is held by the top jaw. The secondary film should be held by the bottom jaw. The experiment is started with a speed of 30 centimeter per minute and the computer control produces a graph of force verses distance. The high and low points off the graph are recorded and the average value is taken as result in N/15 mm. Each film will be measured 8 times to ensure a result with high accuracy.

The invention is further described by the following non-limiting examples which further illustrate the invention, and are not intended, nor should they be interpreted to, limit the scope of the invention.

### EXAMPLES

### Example 1: Inventive Primer

A primer was prepared by stirring the components for 30 minutes at room temperature. Subsequently, the primer mix was dispersed on three roll mill @10 bar / 30°C, with two passes.

| Component | Weight % |
|---|---|
| Ketone-resin (inert resin) | 21.00 |
| Acrylated, epoxdized fatty acid oil (acrylated oil) | 15.35 |
| Aliphatic polyurethane (acrylated oligomer) | 26.00 |
| Propoxylated glycerol triacrylate (monomer) | 27.00 |
| Leveling agent | 0.65 |
| Inorganic filler | 5.00 |
| Anti-misting agent | 3.00 |
| In-can stabilizer | 2.00 |
| Total | 100 |
| | |
| Viscosity η [23°C, @ 2s-1, Pas] | 56.64 |
| Viscosity η [23°C ,@ 50s-1, Pas] | 43.46 |
| Tack 150 [units] | 375 |
| Flow [cm] | 9.5 |
| Grind | (0/0) |

The Example 1 primer was applied on a corona treated PET film (Polyplex TPC101) having a surface tension of 40 dynes/cm, at a film weight of 1.5 g/m² by an offset print prover Model C-05 from IGT company.

A cyan EB ink (Sunbeam Advance, Trademark of Sun Chemical) was printed on top wet-on-wet with a coating weight of 1.5 g/m² by an offset print prover Model C-05 from IGT company.

The print was cured in an EB-curing rig from Comet company at a dose rate of 30 kGy with an acceleration voltage of 110 KeV at an oxygen level of 200 ppm.

Adhesion tape testing - Result: ~98-99% of the inked area under the removed tape remained on the print.

Example 1 exhibits the excellent adhesion of Sunbeam Advance inks on a corona-treated PET film Polyplex TPC101, provided by the inventive primer. Without the primer, the adhesion result on the PET film Polyplex TPC101 is usually less than 50%.

### Example 2: Laminate Prepared Using Inventive Example 1.

On top of the cured print as provided from Example 1, an adhesive layer was applied (Sunlam NS2100A / HA450, Trademark of Sun Chemical) at a coating weight of 2.3 g/m². The print was then laminated with a foil of cast polypropylene at a thickness of 65µm with a lab rubber laminator roll (5 kg weight) and cured in a thermo press for 40 hours at a pressure of 4 bar and a temperature of 40°C.

### Laminate bond strength testing - Result: 2.1 N/15mm (average)

Example 2 shows that a lamination bond strength of more than 2 N/15 mm can be achieved on corona-treated PET film Polyplex TPC101 with the inventive primer in combination with Sunbeam Advance EB-inks, a lamination adhesive and a sealing film. Without the primer, the lamination bond strengths are usually less than 2N/15 mm, often less than 1 N/15mm.

### Example 3: Inventive Primer Including White Pigment

A primer was prepared by stirring the components with a trifoil stirrer for 30 minutes at room temperature. Subsequently, the primer mix was dispersed on three roll mill @10 bar / °30C with two passes.

| Component | Weight % |
|---|---|
| Ketone- resin (inert resin) | 8.00 |
| Acrylated epoxidized oil (acrylated oil) | 6.00 |
| Aliphatic polyurethane (acrylated oligomer) | 13.00 |
| Ethoxylated pentaerythritol tetraacrylate (monomer) | 6.30 |
| propoxylated glycerol triacrylate, (monomer) | 10.00 |
| Leveling agent | 0.50 |
| Inorganic filler | 5.00 |
| Anti-misting agent | 1.00 |
| In-can stabilizer | 0.2 |
| Titanium dioxide | 50.00 |
| Total | 100 |
| | |
| Viscosity η [23°C, @ 2s-1, Pas] | 58.2 |
| Viscosity η [23°C ,@ 50s-1, Pas] | 42.9 |
| Tack 150 [units] | 348 |
| Flow [cm] | 11.5 |
| Grind | (0/0) |

Example 3 shows an embodiment of the primer additionally including the white pigment titanium dioxide. A white primer can be used as a first-down white for lamination printing. This offers the advantage, that no extra print station for the primer is necessary as the primer of Example 3 is actually a first-down white with primer properties.

### Example 4: Press Printing of Example 3 Primer

The primer of Example 3 was printed from the first print station of a wide web offset press on different films. In the ensuing print stations, the EB inks of Suncure Advance inks (Trademark of Sunchemical) were printed on top of the primer wet-on-wet. Subsequently, the primer and the inks were cured by electron beam at a line speed of 200 m/minute at dose rate of 30 kGy and an acceleration voltage of 110KeV and an oxygen level of 200 ppm.

Print conditions & adhesion results:

| EB Offset ink series | EB-primer | Substrates: | Corona Energy | Speed | Run length | Tape test TESA 4104 |
|---|---|---|---|---|---|---|
| Sunbeam Advance | Primer of example 3 | BOPP-corona Taghleef BSS 20 | 3.5 kW | 185 m/min | 500 m | 100% |
| Sunbeam Advance | Primer of example 3 | BOPET-corona treat. TPL-Polyplex TPC101 | 3.5 kW | 185 m/min | 500 m | 75-80% |
| Sunbeam Advance | Primer of example 3 | BOPET-chemical treat. TPL-Polyplex SF1R1 | No | 185 m/min | 500 m | 100% |
| Sunbeam Advance | Primer of example 3 | BOPP-corona metalized Taghleef ZSK | 3.5 kW | 185 m/min | 500 m | 100% |

The table shows the adhesion results of Sunbeam Advance inks on various plastic film substrates for flexible packaging. The ink shows good adhesion to all tested substrates when the primer of Example 3, including the white pigment is used. Often, for lamination printing, a first-down white is printed to provide a white background. Here, the primer of Example 3, containing the white pigment, acts as a first-down white having primer properties.

### Example 5: Inventive Laminate and Migration Analysis

From cut reels of 30 cm width, the printed substrate from Example 4 was laminated on a laminator (LABO Combi 400) at a line speed of 100 meter/minute with the solvent-free lamination adhesive Sunlam NS2100A / HA450, (Trademark of Sun Chemical) at a coating weight of 2.3 g/m². Counter-foil was a cast polypropylene at a thickness of 65 µm. For completion of chemical reaction in the laminate adhesive, the laminates were stored at room temperature for one week.

Migration analysis was performed as described above on laminate parts having a high ink coverage of ∼200%. The conditions for the migration were 40°C for 10 days.

Migration Results:
- Acrylated trifunctional monomer: 7 parts per billion (ppb), specific migration limit (SML) is 50 ppb = passed
- Acrylated tetrafunctional monomer: 3 parts per billion (ppb), specific migration limit (SML) is 10 ppb = passed
- Acrylated epoxidized soybean oil: < 1 parts per billion (ppb), specific migration limit (SML) is 10 ppb = passed

Example 5 shows the analyzed laminates for flexible packaging comply with the specific migration limits (SML) for the individual acrylates in the migration analysis.

### Examples 6-9: Printing of Chlorine-Free Inventive Primers Examples 6-8 vs. Comparative Primer Example 9 Based on Chlorinated Polyester

| Example | Inv. Ex. 6 | Inv. Ex. 7 | Inv. Ex. 8 | Comp. Ex. 9 |
|---|---|---|---|---|
| Component | Weight % | Weight % | Weight % | Weight % |
| Ketone- resin (inert resin) | 21.00 | 20.58 | 8.00 | 0 |
| Acrylated epoxidized oil (acrylated oil) | 15.70 | 15.39 | 6.00 | 0 |
| Aliphathatic polyurethane (acrylated oligomer) | 26.00 | 25.49 | 13.00 | 0 |
| Ethoxylated pentaerythritol tetraacrylate (monomer) | 0 | 0 | 6.30 | 0 |
| Propoxylated glycerol triacrylate (monomer) | 25.75 | 25.25 | 10.00 | 0 |
| Chlorinated polyester | 0 | 0 | 0 | 40.00 |
| Trimethylolpropane Triacrylate | 0 | 0 | 0 | 59.00 |
| Leveling agent I | 0.65 | 0.64 | 0.50 | 0 |
| Inorganic filler | 5.30 | 7.16 | 5.00 | 0 |
| Anti-misting agent | 2.60 | 2.55 | 1.00 | 0 |
| In-can stabilizer | 3.00 | 2.94 | 0.20 | 1.00 |
| Titanium dioxide | 0 | 0 | 50.00 | 0 |
| Total | 100 | 100 | 100 | 100 |
| | | | | |
| Viscosity [23°C, @2s-1, Pas] | 56,64 | 38.71 | 58.20 | 90.2 |
| Viscosity [23°C, @50s-1 Pas] | 43.46 | 37 | 42.90 | 88.9 |
| Tack 150 [units] | 375.00 | 344 | 348.00 | 438.00 |
| Flow [cm] | 9.50 | 19.8 | 11.50 | 12.8 |
| Grind | (0/0) | (0/0) | (0/0) | not measured |
| Adhesion on PET-corona film Polyplex TPC101 12µm [peel-off test with adhesive tape, TESA 4104] | 98% | 90% | 75% | 95% |

The primers of Example 6-9 were printed from the first print station of a central impression offset press on corona treated polyethylene terephthalate PET foil (Polyplex TPC101, 15 µm). In the ensuing print stations, the EB process inks of Suncure Advance inks (Trademark of Sunchemical) were printed on top of the primer wet-on-wet. Subsequently, the primer and the ink on top were cured by electron beam at a line speed of 200 m/minute at dose rate of 30 kGy and an acceleration voltage of 110KeV and an oxygen level of 200 ppm.

The adhesion of the inks on the corona-treated PET with the inventive primer showed the same adhesion level as with the comparative primer, based on chlorinated polyester.

## Claims

1. A chlorine-free, electron-beam curable composition for offset printing, comprising:
- 10-40% of one or more acrylate monomers;
- 5-30% of one or more acrylate oligomers;
- 5-30% of one or more chlorine-free inert resins;
- 5-30% of one or more acrylated epoxidized vegetable oils; and
- 0-60% of one or more white pigment.

2. The composition according to claim 1 comprising 20-40%, preferably 20-30% of one or more acrylate monomers; and/or comprising 10-30%, preferably 20-30% of one or more acrylate oligomers; and/or comprising 10-25%, preferably 15-25% of one or more chlorine-free inert resins; and/or comprising 10-20% of one or more acrylated epoxidized vegetable oils.

3. The composition of any preceding claim which is a chlorine-free electron-beam curable primer for offset printing.

4. The composition according to claim 1 comprising 10-35%, preferably 15-30% of one or more acrylate monomers; and/or comprising 5-25%, preferably 10-20% of one or more acrylate oligomers; and/or comprising 5-20%, preferably 5-15% of one or more chlorine-free inert resins; and/or comprising 5-25%, preferably 5-20%, preferably 5-15%, preferably 5-10% of one or more acrylated epoxidized vegetable oils; and/or comprising 10-60%, preferably 40-60% of one or more white pigments; and/or which is a chlorine-free electron-beam curable first-down white ink for offset printing.

5. The composition according to any preceding claim wherein the one or more white pigment is selected from the group consisting of titanium dioxide, zinc oxide and combinations thereof; and/or wherein the composition does not contain any photoinitiator.

6. The composition according to any preceding claim, wherein the one or more acrylate monomer is selected from the group consisting of ethoxylated trimethylol propane triacrylate, propoxylated glycerol triacrylate, propoxylated diglycerol tetraacrylate, ditrimethylol propane tetraacrylate, pentaerythrithol tetraacrylate, ethoxylated pentaerythrithol tetraacrylate, propoxylated pentaerythrithol tetraacrylate, dipenterythritol pentaacrylate, pentaerythritol hexaacrylate, ethoxylated dipenterythritol hexaacrylate, and combinations thereof; and/or wherein the one or more acrylate oligomer comprises an aliphatic acrylated polyurethane; and/or wherein the one or more inert resin is selected from the group consisting of polyketone resins, urea-formaldehyde resins, and combinations thereof; and/or wherein the one or more acrylated epoxidized vegetable oil is an acrylated epoxidized soybean oil; and/or comprising one or more colorants.

7. The composition according to any preceding claim wherein the composition is suitable for lithographic offset printing.

8. A laminate structure comprising a plastic substrate, the composition of any preceding claim, one or more subsequent ink layers, an adhesive and a sealing substrate wherein the composition and subsequent ink layers are applied by an offset printing process, preferably a lithographic offset printing process.

9. The laminate structure according to claim 8, wherein at least one of the plastic substrates is polyethylene terephthalate (PET); and/or wherein at least one of the plastic substrates is corona-treated, plasma treated or flame-treated.

10. A printed matter, comprising a plastic substrate, the cured composition of any one of claims 1-7 and a cured electron-beam curable offset ink.

11. A method of preparing printed matter comprising:
applying a composition according to any one of claims 1 - 7 to a plastic substrate by offset printing;
curing the composition by electron beam.

12. The method of claim 11 further comprising applying an electron-beam curable ink on top of said composition, preferably by offset printing, and curing the electron-beam curable ink by electron beam, preferably wherein said electron-beam curable ink is applied wet-on-wet on top of said composition, and curing said composition and said electron-beam curable ink by electron-beam in a single curing step.

13. The method of any of claims 11-12 wherein the plastic substrate is a PET film, preferably wherein the PET film is a corona treated PET film.

14. The method of any one of claims 11-13 wherein the curing uses a dose rate of 10-40 kGy and an acceleration voltage of 70-200 KeV, preferably wherein the curing uses a dose rate of 20-30 kGy and an acceleration voltage of 70-120 KeV; and/or further comprising applying an adhesive layer on top of the cured print and then laminating with a sealing substrate; and/or wherein the offset printing is lithographic offset printing.

15. Use of a composition according to any one of claims 1 - 7 to promote adhesion between electron-beam curable inks and plastic substrates in surface prints and laminates.

## Patentansprüche

1. Chlorfreie, elektronenstrahlhärtbare Zusammensetzung für den Offsetdruck, umfassend:
- 10-40 % eines oder mehrerer Acrylat-Monomere;
- 5-30 % eines oder mehrerer Acrylat-Oligomere;
- 5-30 % eines oder mehrerer chlorfreier inerter Harze;
- 5-30 % eines oder mehrerer acrylierter epoxidierter Pflanzenöle und
- 0-60 % eines oder mehrerer Weißpigmente.

2. Zusammensetzung nach Anspruch 1, umfassend 20-40 %, vorzugsweise 20-30 %, eines oder mehrerer Acrylat-Monomere und/oder umfassend 10-30 %, vorzugsweise 20-30 %, eines oder mehrerer Acrylat-Oligomere und/oder umfassend 10-25 %, vorzugsweise 15-25 %, eines oder mehrerer chlorfreier inerter Harze und/oder umfassend 10-20 % eines oder mehrerer acrylierter epoxidierter Pflanzenöle.

3. Zusammensetzung nach einem der vorhergehenden Ansprüche, bei der es sich um einen chlorfreien, elektronenstrahlhärtbaren Primer für den Offsetdruck handelt.

4. Zusammensetzung nach Anspruch 1, umfassend 10-35 %, vorzugsweise 15-30 %, eines oder mehrerer Acrylat-Monomere und/oder umfassend 5-25 %, vorzugsweise 10-20 %, eines oder mehrerer Acrylat-Oligomere und/oder umfassend 5-20 %, vorzugsweise 5-15 %, eines oder mehrerer chlorfreier inerter Harze und/oder umfassend 5-25 %, vorzugsweise 5-20 %, vorzugsweise 5-15 %, vorzugsweise 5-10 %, eines oder mehrerer acrylierter epoxidierter Pflanzenöle; und/oder umfassend 10-60 %, vorzugsweise 40-60 %, eines oder mehrerer Weißpigmente; und/oder bei der es sich um eine chlorfreie, elektronenstrahlhärtbare weiße Vorlagedruckfarbe für den Offsetdruck handelt.

5. Zusammensetzung nach einem der vorhergehenden Ansprüche, wobei das eine Weißpigment bzw. die mehreren Weißpigmente aus der Gruppe bestehend aus Titandioxid, Zinkoxid und Kombinationen davon ausgewählt ist bzw. sind und/oder wobei die Zusammensetzung keinen Photoinitiator enthält.

6. Zusammensetzung nach einem der vorhergehenden Ansprüche, wobei das eine Acrylat-Monomer bzw. die mehreren Acrylat-Monomere aus der Gruppe bestehend aus ethoxyliertem Trimethylolpropantriacrylat, propoxyliertem Glycerintriacrylat, propoxyliertem Diglycerintetraacrylat, Ditrimethylolpropantetraacrylat, Pentaerythritoltetraacrylat, ethoxyliertem Pentaerythritoltetraacrylat, propoxyliertem Pentaerythritoltetraacrylat Dipentaerythritolpentaacrylat, Pentaerythritolhexaacrylat, ethoxyliertem Dipentaerythritolhexaacrylat und Kombinationen davon ausgewählt ist bzw. sind und/oder wobei das eine Acrylat-Oligomer bzw. die mehreren Acrylat-Oligomere ein aliphatisches acryliertes Polyurethan umfasst bzw. umfassen und/oder wobei das eine inerte Harz bzw. die mehreren inerten Harze aus der Gruppe bestehend aus Polyketonharzen, Harnstoff-Formaldehyd-Harzen und Kombinationen davon ausgewählt ist bzw. sind und/oder wobei es sich bei dem einen acrylierten epoxidierten Pflanzenöl bzw. den mehreren acrylierten epoxidierten Pflanzenölen um ein acryliertes epoxidiertes Sojaöl handelt; und/oder umfassend ein oder mehrere Farbmittel.

7. Zusammensetzung nach einem der vorhergehenden Ansprüche, wobei die Zusammensetzung für den lithographischen Offsetdruck geeignet ist.

8. Laminataufbau, umfassend ein Kunststoffsubstrat, die Zusammensetzung nach einem der vorhergehenden Ansprüche, eine oder mehrere nachfolgende Druckfarbenschichten, einen Klebstoff und ein Versiegelungssubstrat, wobei die Zusammensetzung und die nachfolgenden Druckfarbenschichten nach einem Offsetdruckverfahren, vorzugsweise einem lithographischen Offsetdruckverfahren, aufgebracht wurden.

9. Laminataufbau nach Anspruch 8, wobei es sich bei mindestens einem der Kunststoffsubstrate um Polyethylenterephthalat (PET) handelt und/oder wobei mindestens eines der Kunststoffsubstrate koronabehandelt, plasmabehandelt oder flammenbehandelt ist.

10. Drucksache, umfassend ein Kunststoffsubstrat, die gehärtete Zusammensetzung nach einem der Ansprüche 1-7 und eine gehärtete elektronenstrahlhärtbare Offsetdruckfarbe.

11. Verfahren zur Herstellung einer Drucksache, das Folgendes umfasst:
Aufbringen einer Zusammensetzung nach einem der Ansprüche 1-7 auf ein Kunststoffsubstrat durch Offsetdruck;
Härten der Zusammensetzung mittels Elektronenstrahl.

12. Verfahren nach Anspruch 11, ferner umfassend das Aufbringen einer elektronenstrahlhärtbaren Druckfarbe auf die Zusammensetzung, vorzugsweise durch Offsetdruck, und das Härten der elektronenstrahlhärtbaren Druckfarbe mittels Elektronenstrahl, vorzugsweise wobei die elektronenstrahlhärtbare Druckfarbe nass-in-nass auf die Zusammensetzung aufgebracht wird und das Härten der Zusammensetzung und der elektronenstrahlhärtbaren Druckfarbe mittels Elektronenstrahl in einem einzigen Härtungsschritt durchgeführt wird.

13. Verfahren nach einem der Ansprüche 11-12, wobei es sich bei dem Kunststoffsubstrat um eine PET-Folie handelt, vorzugsweise es sich bei der PET-Folie um eine koronabehandelte PET-Folie handelt.

14. Verfahren nach einem der Ansprüche 11-13, wobei bei der Härtung eine Dosisrate von 10-40 kGy und eine Beschleunigungsspannung von 70-200 keV verwendet wird, vorzugsweise wobei bei der Härtung eine Dosisrate von 20-30 kGy und eine Beschleunigungsspannung von 70-120 keV verwendet wird; und/oder ferner umfassend das Aufbringen einer Klebstoffschicht auf den gehärteten Druck und anschließendes Laminieren mit einem Versiegelungssubstrat; und/oder wobei es sich bei dem Offsetdruck um lithographischen Offsetdruck handelt.

15. Verwendung einer Zusammensetzung nach einem der Ansprüche 1 bis 7 zur Förderung der Haftung zwischen elektronenstrahlhärtbaren Druckfarben und Kunststoffsubstraten in Oberflächendrucken und Laminaten.

## Revendications

1. Composition sans chlore durcissable par faisceau d'électrons pour l'impression offset, comprenant :
- 10-40 % d'un ou plusieurs monomères d'acrylate ;
- 5-30 % d'un ou plusieurs oligomères d'acrylate ;
- 5-30 % d'une ou plusieurs résines inertes sans chlore ;
- 5-30 % d'une ou plusieurs huiles végétales acrylées époxydées ; et
- 0-60 % d'un ou plusieurs pigments blancs.

2. Composition selon la revendication 1 comprenant 20-40 %, de préférence 20-30 % d'un ou plusieurs monomères d'acrylate, et/ou comprenant 10-30 %, de préférence 20-30 % d'un ou plusieurs oligomères d'acrylate, et/ou comprenant 10-25 %, de préférence 15-25 % d'une ou plusieurs résines inertes sans chlore, et/ou comprenant 10-20 % d'une ou plusieurs huiles végétales acrylées époxydées.

3. Composition d'une quelconque revendication précédente qui est un apprêt sans chlore durcissable par faisceau d'électrons pour l'impression offset.

4. Composition selon la revendication 1 comprenant 10-35 %, de préférence 15-30 % d'un ou plusieurs monomères d'acrylate, et/ou comprenant 5-25 %, de préférence 10-20 % d'un ou plusieurs oligomères d'acrylate, et/ou comprenant 5-20 %, de préférence 5-15 % d'une ou plusieurs résines inertes sans chlore, et/ou comprenant 5-25 %, de préférence 5-20 %, de préférence 5-15 %, de préférence 5-10 % d'une ou plusieurs huiles végétales acrylées époxydées, et/ou comprenant 10-60 %, de préférence 40-60 % d'un ou plusieurs pigments blancs, et/ou qui est une encre blanche de fond sans chlore durcissable par faisceau d'électrons pour l'impression offset.

5. Composition selon une quelconque revendication précédente, le ou les pigments blancs étant choisis dans le groupe constitué par le dioxyde de titane, l'oxyde de zinc et les combinaisons de ceux-ci, et/ou la composition ne contenant aucun photoinitiateur.

6. Composition selon une quelconque revendication précédente, dans laquelle le ou les monomères d'acrylate sont choisis dans le groupe constitué par le triacrylate de triméthylolpropane éthoxylé, le triacrylate de glycérol propoxylé, le tétraacrylate de diglycérol propoxylé, le tétraacrylate de ditriméthylolpropane, le tétraacrylate de pentaérythritol, le tétraacrylate de pentaérythritol éthoxylé, le tétraacrylate de pentaérythritol propoxylé, le pentaacrylate de dipentaérythritol, l'hexaacrylate de pentaérythritol, l'hexaacrylate de dipentaérythritol éthoxylé et les combinaisons de ceux-ci, et/ou dans laquelle le ou les oligomères d'acrylate comprennent un polyuréthane aliphatique acrylé, et/ou dans laquelle la ou les résines inertes sont choisies dans le groupe constitué par les résines de polycétone, les résines urée-formaldéhyde et les combinaisons de celles-ci, et/ou dans laquelle la ou les huiles végétales acrylées époxydées sont une huile de soja acrylée époxydée, et/ou comprenant un ou plusieurs colorants.

7. Composition selon une quelconque revendication précédente, la composition étant appropriée pour l'impression offset lithographique.

8. Structure stratifiée comprenant un substrat en plastique, la composition d'une quelconque revendication précédente, une ou plusieurs couches d'encre consécutives, un adhésif et un substrat d'étanchéité, dans laquelle la composition et les couches d'encre consécutives sont appliquées par un procédé d'impression offset, de préférence un procédé d'impression offset lithographique.

9. Structure stratifiée selon la revendication 8, dans laquelle au moins un des substrats en plastique est du téréphtalate de polyéthylène (PET), et/ou dans laquelle au moins un des substrats en plastique est traité corona, traité par plasma ou flammé.

10. Matière imprimée, comprenant un substrat en plastique, la composition durcie de l'une quelconque des revendications 1 à 7 et une encre offset durcissable par faisceau d'électrons durcie.

11. Procédé de préparation de matière imprimée comprenant :
l'application d'une composition selon l'une quelconque des revendications 1 à 7 à un substrat en plastique par impression offset ;
le durcissement de la composition par faisceau d'électrons.

12. Procédé de la revendication 11 comprenant en outre l'application d'une encre durcissable par faisceau d'électrons au-dessus de ladite composition, de préférence par impression offset, et le durcissement de l'encre durcissable par faisceau d'électrons par faisceau d'électrons, de préférence dans lequel ladite encre durcissable par faisceau d'électrons est appliquée humide sur humide au-dessus de ladite composition, et le durcissement de ladite composition et de ladite encre durcissable par faisceau d'électrons par faisceau d'électrons est une seule étape de durcissement.

13. Procédé de l'une quelconque des revendications 11 et 12, dans lequel le substrat en plastique est un film de PET, de préférence dans lequel le film de PET est un film de PET traité corona.

14. Procédé de l'une quelconque des revendications 11 à 13 dans lequel le durcissement utilise un débit de dose de 10-40 kGy et une tension d'accélération de 70-200 keV, de préférence dans lequel le durcissement utilise un débit de dose de 20-30 kGy et une tension d'accélération de 70-120 keV, et/ou comprenant en outre l'application d'une couche adhésive au-dessus de l'imprimé durci puis la stratification avec un substrat d'étanchéité, et/ou dans lequel l'impression offset est une impression offset lithographique.

15. Utilisation d'une composition selon l'une quelconque des revendications 1 à 7 pour favoriser l'adhérence entre des encres durcissables par faisceau d'électrons et des substrats en plastique dans des imprimés et stratifiés de surface.
